# EUROPEAN PATENT APPLICATION

(11) **EP 4 566 462 A1**
(43) Date of publication of application: **11.06.2025**
(21) Application number: 23214370.1
(22) Date of filing: 05.12.2023
(51) Int. Cl.: A24C 5/18, A24D 3/02, B23K 26/08, B23K 26/38

(54) **APPARATUS AND METHOD FOR MANUFACTURING ROD-SHAPED ELEMENTS FOR AEROSOL-GENERATING ARTICLES**

(71) Applicant: Philip Morris Products S.A., 2000 Neuchâtel (CH)
(72) Inventor: The designation of the inventor has not yet been filed
(74) Representative: PGA S.p.A., Milano, Succursale di Lugano

(57) **Abstract**

An apparatus for manufacturing rod-shaped elements for aerosol-generating articles, comprises an extraction device configured to extract a sheet of material (11) from a storage (13) and to guide it along a conveying path, a weakening device (23) placed along the conveying path and configured for weakening the sheet of material, a folding and wrapping device (15) placed downstream of the weakening device and configured for gathering the sheet of material in a rod-shaped configuration and to wrap the sheet of material in a wrapper and forming a continuous rod, a cutting device (22) placed downstream of the folding and wrapping device and configured for cutting the continuous rod in a plurality of rod-shaped elements. The weakening device comprises one or more laser sources (25) configured for making weakened lines into the sheet of material through a laser beam.

## Description

The present disclosure relates to an apparatus and a method for manufacturing rod-shaped elements for aerosol-generating articles.

An aerosol-generating article, or heat-not-burn consumable, comprises an aerosol-generating substrate that is heated rather than combusted. The aerosol-generating substrate is, for instance, a tobacco-free herbaceous or plant-based cast sheet or a biodegradable fiber-based material. Typically, in such heated aerosol-generating articles an aerosol is generated by the transfer of heat from a heat source to a physically separate aerosol-generating substrate or material. During use, the aerosol-generating article is inserted in an electronic heating device comprising the heat source. Volatile compounds are released from the aerosol-generating substrate by heat transfer from the heat source and are entrained in air drawn through the aerosol-generating article. As the released compounds cool, they condense to form an aerosol.

An aerosol-generating article is an assembly of different kinds of rod-shaped elements (small cylinders) enclosed in one or more wrapping materials. For instance, one of the rod-shaped elements is usually made of a gathered sheet of a substrate which generates aerosol when heated. Another rod-shaped element could be made of polylactic acid which helps to cool down the air heated in the substrate before it reaches the consumer. Another rod-shaped element could be made of cellulose acetate that has a filter function.

In order to manufacture the rod-shaped elements, a main material of the rod-shaped elements (e.g. aerosol-generating substrate with or without tobacco ingredient or polylactic acid or paper or cellulose acetate tow) provided in sheet format may be submitted to various pre-treatments, then goes through a "rod forming" stage where the sheet of material is guided into a converging device and exits as a rod of material having a desired diameter. The rod of material is then wrapped in a continuous sheet of wrapping paper which is progressively closed on the rod of material. The resulting continuous wrapped rod is then cut by a rotating knife in rod-shaped elements which are input to an assembly line. The different kinds of rod-shaped elements are afterwards aligned, abutted and wrapped in a further sheet material to form a continuous rod. The continuous wrapped rod made of different rod-shaped elements is then cut in smaller rods which are the final consumables or are used to manufacture the final consumables.

Among the cited various pre-treatments, the sheet of material is submitted to a crimping process which is usually applied after the sheet of material has been unwound from a bobbin or pulled out from a bale and just before the sheet of material is pulled into the converging device, such as a funnel-shaped device, to get shaped into the continuous wrapped rod. According to known crimping processes, the sheet of material is continuously fed to a pair of interleaved rollers (crimping rollers) able to impress a plurality of longitudinally (or sometime transversally) extending crimp corrugations to the continuous sheets. The crimping process creates ridges and grooves in the band of material and weakens the band of material.

The crimping process is helpful for folding and gathering the sheet of material into the rod. Indeed, the corrugations define folding lines and facilitate folding and gathering of the sheet of material. The defined folding line by the corrugations ensure regular and homogeneous folding of the material when it gets shaped into a rod. The crimping process also influences, inter alia, the amount of air contact, the Resistance to Draw (RTD), and others properties and, hence, is directly experienced by the users of the aerosol-generating articles. It could best ensure the consistency and replicability of the product performance and characteristic of the aerosol-generating article.

For instance, an apparatus for crimping a web of material is disclosed in document EP3840594A1, a method and an apparatus of manufacturing variable crimped web material are disclosed in document EP3041375B1.

It would be desirable to have an apparatus and a method for manufacturing rod-shaped elements for aerosol-generating articles able to further improve the quality of said rod-shaped elements and thus of the resulting aerosol-generating articles.

It would be desirable to have an apparatus and a method capable of manufacturing rod-shaped elements for aerosol-generating articles such as to guarantee an optimal experience to the final user.

It would be desirable to have an apparatus and a method for manufacturing the rod-shaped elements which is capable of weakening the sheets of material while eliminating or at least mitigating drawbacks of the known crimping methods and devices.

It would be desirable to have a device for weakening sheets of material providing an alternative to mechanical crimping.

It would be desirable to provide an apparatus and a method for manufacturing the rod-shaped elements capable of increasing the flexibility of known methods and devices for weakening the sheets of material.

It would be desirable to improve the quality of the weakened sheets of material.

It would be desirable to reduce maintenance costs of the apparatuses and a methods for manufacturing the rod-shaped elements, particularly of the device for weakening the sheets of material.

It would be desirable to reduce the downtime required to change the setting of the apparatus, particularly of the device for weakening the sheets of material.

It would be desirable to improve the repeatability of the weakening step according to applied settings.

The present disclosure relates to an apparatus for manufacturing rod-shaped elements for aerosol-generating articles. The apparatus may comprise an extraction device configured to extract a sheet of material from a storage of the sheet of material and to guide the sheet of material along a conveying path and in a conveying direction parallel to a lengthwise direction of said sheet of material. The apparatus comprises a weakening device placed along the conveying path and downstream of the extraction device. The weakening device is configured for weakening the sheet of material. The apparatus may also comprise a folding and wrapping device placed downstream of the weakening device and configured for gathering the sheet of material in a rod-shaped configuration and to wrap the sheet of material in the rod-shaped configuration in a wrapper and forming a continuous rod. The apparatus may also comprise a cutting device placed downstream of the folding and wrapping device and configured for cutting the continuous rod in a plurality of rod-shaped elements. The weakening device comprises at least one laser source configured for creating weakened lines by removing material from the sheet of material through a laser beam emitted by the laser source.

The inventor found that the laser allows to create the weakened lines in the sheet of material by removing material through vaporization, thus providing a contactless laser crimping and weakening. The weakened lines define folding lines when the sheet of material is gathered; when compressed the sheet of material folds along the weakened lines.

The inventor found that the laser weakening is an alternative to mechanical crimping that eliminates or at least mitigates drawbacks of the known crimping methods and devices. Indeed, the laser may be controlled to generate weakened lines while maintaining the integrity of the sheet (i.e. without the sheet being broken up cut into strips or pieces) also when the sheet is gathered.

The inventor found that the use of laser allows to generate the weakened lines in an accurate manner on a wide range of materials, reflecting the set design parameters and being provided with consistent features over time. This assures a correct weakening of the sheet of material and improves the quality of the rod-shaped elements and of the resulting aerosol-generating articles. Indeed, the correct weakening prevents splitting or expansion of the gathered sheet of material and of the rod-shaped elements and/or prevents breakage of material into small parts that could obstruct air paths or create unwanted air paths jeopardizing or modifying the flow of air and aerosol in the aerosol-generating article. Indeed, even after weakening, the sheet of material keeps its sheet form and is not broken up or cut into strips or pieces. Keep the sheet form would allow an homogeneous gathering and would lead to less variation of resistance to draw (RTD).

The inventor found that the disclosed apparatus allows to control the shapes, sizes and distribution of the weakened lines in the sheet of material with high precision and with flexibility because, by controlling the laser, the shape and depth of the weakened lines may be easily changed and/or adjusted.

The inventor found that the disclosed apparatus increases the flexibility of the known crimping devices, because position and setting of the laser source may be changed quickly and easily while the known crimping rollers have to be replaced with others in order to change features of the grooves generated in the sheet of material (crimping format). Therefore, the disclosed apparatus allow to reduce also machine downtimes.

The inventor found that the setup of the disclosed laser weakening device is easy and quick while the known crimping rollers' profiles are difficult to align, transversally and longitudinally, during the setting phase.

The inventor found that the disclosed apparatus allows to reduce maintenance costs, since the laser source is not subject to high wear while the known crimping rollers should be reworked or replaced due to wear caused by friction. Indeed, the laser source has long life and high reliability and there is no mechanical contact between parts (contactless process). Furthermore, the laser source does not require frequent adjustments while the known crimping rollers must be often realigned.

The at least one laser source may be arranged to direct the laser beam on one side of the sheet of material or may be arranged to direct the laser beam on both sides of the sheet of material.

The inventor found that the weakened lines (grooves) on both sides improve the regularity of the folds of the resulting folded and gathered sheet of material and the homogeneity of the passageways delimited by the folded and gathered sheet of material in the rod-shaped element. Indeed, weakening the sheet of material on both sides increases the chances or predefined the folding lines to create wave-like structures of the folded sheet, since the sheet of material collapses on itself most likely along the weakened lines on the material sheet when compressed in the folding and wrapping device. Therefore, the sheet distribution in the rod-shaped element is somehow homogeneous.

The inventor also found that replacing the known crimping rollers with the laser weakening device here disclosed is possible and easy and does not require changes of other parts of the apparatus upstream o downstream.

In some embodiments, the at least one laser source is stationary while the sheet of material moves in the conveying direction.

The weakened lines are generated by the relative motion of the sheet of material in the conveying direction with respect to the laser beam.

In some embodiments, the at least one laser source is movable transversely to said conveying direction.

The inventor found that the shape of the weakened lines on the sheet of material may result also from the transverse motion of the laser source with respect to the sheet of material.

In some embodiments, the at least one laser source is configured to generate at least two laser beams aligned along a line parallel to the conveying direction such to engrave progressively the sheet of material by the at least two laser beams sweeping the sheet of material one after the other. Each successive beam vaporizes a bit more of material and increases the depth of the weakened line.

The inventor found that the progressive engraving may be carried out through low power laser beams instead of a single high power laser beam and this prevents the sheet of material to heat up too much and burn and prevents creating a large heat affected zone around the weakened line that would compromise the properties of the material and of the resulting aerosol-generating article.

In some embodiments, a turning device is located between successive laser sources along the conveying path, the turning device being configured to turn upside down the sheet of material and to switch sides of the sheet of material. The turning device may comprise a couple of rollers facing each other and having parallel rotation axes.

The inventor found that the turning device allows to generate the weakened lines (grooves) on both sides of the sheet of material by arranging the successive laser sources on a same side of the conveying path, for instance above or below the conveying path. This may simplify the layout and setup of the apparatus.

In some embodiments, a support element having a flat surface is located along the conveying path. The flat surface may lie against one side of the sheet of material while an opposite side of the sheet of material receives the laser beam emitted by the laser source.

The inventor found that the flat surface allows to keep the sheet of material flat and in a fixed plane and this improves the accuracy of the laser generated weakened lines.

The flat surface may be a low friction surface, such as stainless steel with surface treatments that provide low treatments (ex. DLC).

The inventor found that the low friction surface allows to keep the sheet of material in the fixed plane.

The flat surface may have a honeycomb or lattice-like structure.

The inventor found that this kind of structure allows to decrease or disperse stored laser-generated heat as well as the risk of laser reflection.

Alternatively, the support structure may comprise a guiding roller.

In some embodiments, the weakening device comprises an optical assembly configured to intercept the at least one laser beam and to direct and target the at least one laser beam on the sheet of material.

The inventor found that the optical assembly allows to easy manage and guide the laser beam from the laser source to the sheet of material.

The optical assembly may be configured to direct the at least one laser beam on one side or on both sides of the sheet of material. The optical assembly may be configured to generate a plurality of output laser beams and to make said plurality of output laser beams impinge on the sheet of material. Said plurality of output laser beams may be arranged according to a 1-dimensional beam array or a 2-dimensional beam matrix of output laser beams.

According to some embodiments, the optical assembly comprises a multi-spot beam generator; the multi-spot beam generator being configured to divide the at least one laser beam from the laser source into the plurality of output laser beams. The multi-spot beam generator may be a diffractive optical element.

The inventor found that the multi-spot beam generator allows to divide a single highly energetic laser beam from the laser source in multiple low-power output laser beams, creating several weakened lines from the one single incident laser beam.

The multi-spot beam generator may be fixed or may be configured to be rotated around an axis matching the laser beam coming from the laser source to rotate the plurality of output laser beams.

The inventor found that the rotation of the plurality of output laser beams may be used to generate different patterns of weakened lines.

According to some embodiments, the optical assembly comprises a focusing lens configured to focus the at least one laser beam on the sheet of material.

The inventor found that the focusing lens to focus laser beam(s) allows to generate more delimited beam(s) and, for a same amount of laser power, to decrease the heat affected zone.

The focusing lens may be placed between the multi-spot beam generator and the sheet of material to focus each of the plurality of output laser beams on the sheet of material.

In some embodiments, the weakening device comprises a plurality of laser sources and a plurality of multi-spot beam generators each coupled to a respective laser source to direct the plurality of output laser beams on different parts of the sheet of material.

In some embodiments, the optical assembly comprises a plurality of multi-spot beam generators coupled to one laser source to direct the plurality of output laser beams on different parts of the sheet of material.

In some embodiments, the one laser source is movable to direct the laser beam towards one of multi-spot beam generators at a time.

In some embodiments, the optical assembly further comprises at least one beam splitter and a plurality of reflecting elements to direct the laser beam towards all the multi-spot beam generators simultaneously.

In some embodiments, each multi-spot beam generator is paired with a respective focusing lens.

In some embodiments, the optical assembly comprises a single multi-spot beam generator extending across a width of the sheet of material and coupled to one laser source. The one laser source may be movable to direct the laser beam towards different portions of the single multi-spot beam generator. The focusing lens may extend across a width of the sheet of material and the single multi-spot beam generator is paired with said focusing lens.

The inventor found that the number and arrangement of the laser sources and the number, arrangement and structure of the optical assemblies may be designed and implemented easily and quickly according to the properties of the sheet of material to be weakened and of the production needs. Also a power and/or a wavelengths of the laser may be selected according to the material to be worked.

The at least one laser source may be a carbon-dioxide laser or a fiber laser.

The inventor found that these kinds of laser source is suitable for the different types of material to be weakened. For instance, carbon-dioxide laser has a wavelength between 9 µm and 11 µm. Since many natural and synthetic materials have strong absorption in this range, a large part of the laser beam is not reflected by the material and actively generates the weakened lines (high efficacy). For instance, in fiber lasers, the optical gain medium is an optical fiber which is compact and flexible and may be installed easily in the apparatus. For instance, a power of the laser source is between 200 W and 600 W. The power of the laser source may be modulated depending on the material of the sheet, of the amount of material to be vaporized and by the conveyance speed of the sheet of material and on the profile of the desired weakened lines.

In some embodiments, the weakening device comprises a blower and/or a suction device working on the sheet of material to remove fumes and residues generated by the laser beam. The blower and/or the suction device may be located at or downstream of the at least one laser source.

The inventor found the heat generated by the laser beam(s) creates fumes and residues and the dedicated blower and/or suction device is capable of removing such fumes and dislodging the residues from the weakened lines and away from the sheet of material.

In some embodiments, the storage of the sheet of material is a reel holder and the sheet of material may be coiled on said reel holder.

In some embodiments, the storage of the sheet of material is a bale.

The folding and wrapping device may comprise a funnel-shaped device and a feeder of the wrapper.

The present disclosure also relates to a method for manufacturing rod-shaped elements for aerosol-generating articles. The method may comprise: conveying a sheet of material along a conveying path and in a conveying direction parallel to a longitudinal direction of said sheet of material. The method comprises: weakening the sheet of material while conveyed along the conveying path. The method may comprise: gathering the sheet of material in a rod-shaped configuration and wrapping the sheet of material in the rod-shaped configuration in a wrapper to form a continuous rod while conveyed along the conveying path. The method may comprise: cutting the continuous rod in a plurality of rod-shaped elements. Weakening the sheet of material comprises: directing at least one laser beam on the sheet of material to create weakened lines by removing material from the sheet of material.

The inventor found that the laser provides a contactless laser crimping and weakening that eliminates or at least mitigates drawbacks of the known crimping methods and devices. The inventor found that the disclosed method allows to control the shapes, sizes and distribution of the weakened lines in the sheet of material with high precision.

Said method for manufacturing rod-shaped elements for aerosol-generating articles may be carried out by an apparatus for manufacturing rod-shaped elements for aerosol-generating articles. Said apparatus may comprise an extraction device configured to extract a sheet of material from a storage of the sheet of material and to guide the sheet of material along a conveying path and in a conveying direction parallel to a longitudinal direction of said sheet of material. The apparatus comprises a weakening device placed along the conveying path and downstream of the extraction device. The weakening device is configured for weakening the sheet of material. The apparatus may also comprise a folding and wrapping device placed downstream of the weakening device and configured for gathering the sheet of material in a rod-shaped configuration and to wrap the sheet of material in the rod-shaped configuration in a wrapper and forming a continuous rod. The apparatus may also comprise a cutting device placed downstream of the folding and wrapping device and configured for cutting the continuous rod in a plurality of rod-shaped elements. The weakening device comprises at least one laser source configured for creating weakened lines by removing material from the sheet of material through a laser beam emitted by the laser source.

According to some embodiments, the method comprises: directing the at least one laser beam on one side of the sheet of material such to make the weakened lines on said one side.

According to some embodiments, the method comprises: directing the at least one laser beam on both sides of the sheet of material such to make the weakened lines (grooves) on said both sides.

The inventor found that the weakened lines (grooves) on both sides improves the homogeneity of the sheet distribution in the rod-shaped element.

According to some embodiments, the at least one laser beam is kept stationary while the sheet of material moves in the conveying direction.

According to some embodiments, the at least one laser beam is moved transversely to the conveying direction while the sheet of material moves in the conveying direction.

The inventor found that the transverse motion of the laser beam with respect to the sheet of material allows to generate different weakened line patterns on the sheet of material.

The at least one laser beam may be controlled such that the weakened lines have a final depth less than a thickness of the sheet of material (to create grooves) or equal to said thickness of the sheet of material (to create slits passing through the sheet of material). For instance, a ratio of the final depth of the weakened lines to the thickness of the sheet of material is between 0.2 and 0.8. The ratio of the final depth of the weakened lines to the thickness of the sheet of material may be between 0.4 and 0.6. The ratio of the final depth of the weakened lines to the thickness of the sheet of material may be 0.5.

The inventor found that the final depth may be adjusted as a function of the thickness of the sheet of material and/or of the degree of weakening required.

In some embodiments, the method comprises: engraving progressively the weakened lines through laser beams following one after the other. The laser beams following one after the other may be between two and six in number. The laser beams following one after the other may be controlled to each engrave a respective depth. For instance, each respective depth is between 1/6 and 1/2 of a final depth of the weakened lines.

The inventor found that, by engraving each weakened lines progressively through the laser beams following one after the other, creation of a large heat affected zone around the weakened lines is prevented.

In some embodiments, the at least one laser beam on the sheet of material is focused on the sheet of material.

The inventor found that the focusing the laser beam(s) allows to generate more delimited beam(s) and, for a same amount of laser power, to decrease the heat affected zone.

An amount of material removed by making the weakened lines through the at least one laser beam may be between 1% and 15% of the sheet of material. For instance, said amount of material is between 7% and 13%. For instance, said amount of material is 10%. Being 100 the amount of material in weight of the sheet of material or of a section of the sheet of material before the laser weakening, the amount of material in weight removed by the laser from the sheet of from said section is between 1 and 15.

The inventor found that the amount of material removed may be adjusted as a function of the thickness of the sheet of material and/or of the degree of weakening required and/or of the kind of material.

In some embodiments, directing at least one laser beam comprises: dividing the at least one laser beam in a plurality of output laser beams and making said plurality of output laser beams impinge on the sheet of material. The at least one laser beam may be focused after dividing in the plurality of output laser beams.

The inventor found that the plurality of output laser beams allows to create several weakened lines from one single incident laser beam.

The plurality of output laser beams may be arranged according to a 1-dimensional beam array or a 2-dimensional beam matrix of laser beams. The 1-dimensional beam array may span across a width of the sheet of material. The 1-dimensional array may comprise P dots. The P dots may be between 2 and 6. The output laser beams of the 2-dimensional beam matrix may be arranged in M rows and N columns. The M rows may span across a width of the sheet of material. The N columns may span along the longitudinal direction of said sheet of material. For instance, the M rows are between 2 and 6. For instance, the N columns are between 2 and 6. The laser beams following one after the other may be the output laser beams of each of the N columns.

In some embodiments, directing the at least one laser beam on the sheet of material comprises: directing a first laser beam or a first plurality of laser beams on one side of the sheet of material, turning upside down the sheet of material and switching sides of the sheet of material, directing a second laser beam or a second plurality of laser beams on an opposite side of the sheet of material.

The inventor found that turning the sheet of material is a cheap and effective way of making the weakened lines (grooves) on both sides.

In some embodiments, the sheet of material is kept flat at least where it receives the at least one laser beam. One side of the sheet of material may be supported on a flat surface while an opposite side of the sheet of material receives the at least one laser beam.

The inventor found that, if the sheet of material is flat, the accuracy of the laser generated weakened lines is improved.

The sheet of material may be moved along the conveying direction with a conveying speed between 200 m/min and 500 m/min while receiving the at least one laser beam.

The present disclosure also relates to a sheet of material for manufacturing rod-shaped elements for aerosol-generating articles, the sheet of material having laser made weakened lines.

The sheet of material may be made using an apparatus for manufacturing rod-shaped elements for aerosol-generating articles. The apparatus may comprise an extraction device configured to extract a sheet of material from a storage of the sheet of material and to guide the sheet of material along a conveying path and in a conveying direction parallel to a longitudinal direction of said sheet of material. The apparatus comprises a weakening device placed along the conveying path and downstream of the extraction device. The weakening device is configured for weakening the sheet of material. The apparatus may also comprise a folding and wrapping device placed downstream of the weakening device and configured for gathering the sheet of material in a rod-shaped configuration and to wrap the sheet of material in the rod-shaped configuration in a wrapper and forming a continuous rod. The apparatus may also comprise a cutting device placed downstream of the folding and wrapping device and configured for cutting the continuous rod in a plurality of rod-shaped elements. The weakening device comprises at least one laser source configured for creating weakened lines by removing material from the sheet of material through a laser beam emitted by the laser source.

The sheet of material may be made through a method for or manufacturing rod-shaped elements for aerosol-generating articles. The method may comprise: conveying a sheet of material along a conveying path and in a conveying direction parallel to a longitudinal direction of said sheet of material. The method comprises: weakening the sheet of material while conveyed along the conveying path. The method may comprise: gathering the sheet of material in a rod-shaped configuration and wrapping the sheet of material in the rod-shaped configuration in a wrapper to form a continuous rod while conveyed along the conveying path. The method may comprise: cutting the continuous rod in a plurality of rod-shaped elements. Weakening the sheet of material comprises: directing at least one laser beam on the sheet of material to create weakened lines by removing material from the sheet of material.

The weakened lines (grooves) may be on one side or on both sides of the sheet of material. The weakened lines on one side may be offset with respect to the weakened lines on the opposite side. The weakened lines may be continuous or interrupted or dotted or dashed. The weakened lines may be straight or wavy. The weakened lines may be grooves not passing through the sheet of material may be slits or perforations passing through the sheet of material. If the weakened lines pass through the sheet of material, they are interrupted or dotted or dashed and not continuous to avoid cutting the sheet into strips.

The sheet of material may an aerosol-generating substrate, such as a reconstituted tobacco sheet. The sheet of material may be made of polymeric material, such as polylactic acid, or cellulose or acetate tow or cotton.

The present disclosure also relates to a rod-shaped element for aerosol-generating articles and to an aerosol-generating article comprising said rod-shaped element. The rod shaped element comprises the sheet of material having laser made weakened lines.

As used in the present description, a "sheet of material" is an endless strip or tape or ribbon.

As used in the present description, "gathering" means to bring together, to collect by folding.

As used in the present description, a "continuous rod" is one of the continuous rods manufactured in the process for making the aerosol-generating articles and comprising a material in a rod shaped configuration wrapped in a wrapper.

The invention is defined in the claims. However, below there is provided a non-exhaustive list of non-limiting examples. Any one or more of the features of these examples may be combined with any one or more features of another example, embodiment, or aspect described herein.

EX1. An apparatus for manufacturing rod-shaped elements for aerosol-generating articles, comprising:
an extraction device configured to extract a sheet of material from a storage of the sheet of material and to guide the sheet of material along a conveying path and in a conveying direction parallel to a longitudinal direction of said sheet of material;
a weakening device placed along the conveying path and downstream of the extraction device, the weakening device being configured for weakening the sheet of material;
a folding and wrapping device placed downstream of the weakening device and configured for gathering the sheet of material in a rod-shaped configuration and to wrap the sheet of material in the rod-shaped configuration in a wrapper and forming a continuous rod;
a cutting device placed downstream of the folding and wrapping device and configured for cutting the continuous rod in a plurality of rod-shaped elements;
wherein the weakening device comprises at least one laser source configured for creating weakened lines by removing material from the sheet of material through a laser beam emitted by the laser source.

EX2. The apparatus according to EX1, wherein the at least one laser source is arranged to direct the laser beam on one side or on both sides of the sheet of material.

EX3. The apparatus according to EX1 or EX2, wherein the at least one laser source is stationary while the sheet of material moves in the conveying direction.

EX4. The apparatus according to EX1 or EX2, wherein the at least one laser source is movable transversely to said conveying direction.

EX5. The apparatus according to any of EX1 to EX4, wherein the at least one laser source is configured to generate at least two laser beams aligned along a line parallel to the conveying direction such that one weakened line is engraved progressively by the at least two laser beams sweeping the sheet of material one after the other.

EX6. The apparatus according to any of EX1 to EX5, comprising a turning device located between successive laser sources along the conveying path, the turning device being configured to turn upside down the sheet of material and to switch sides of the sheet of material; optionally wherein the turning device comprises a couple of rollers facing each other and having parallel rotation axes.

EX7. The apparatus according to any of claims EX1 to EX6, further comprising a support element having a flat surface located along the conveying path, the flat surface lying against one side of the sheet of material while an opposite side of the sheet of material receives the laser beam emitted by the laser source; optionally the flat surface is a low friction surface such as stainless steel with surface treatments that provide low treatments; optionally the flat surface has a honeycomb or lattice-like structure; alternatively, the support structure comprises a guiding roller.

EX8. The apparatus according to any of EX1 to EX7, wherein the weakening device comprises an optical assembly configured to intercept the at least one laser beam and to direct and target the at least one laser beam on the sheet of material.

EX9. The apparatus according to claim EX8, wherein the optical assembly is configured to direct the at least one laser beam on one side or on both sides of the sheet of material.

EX10. The apparatus according to EX8 or EX9, wherein the optical assembly is configured to generate a plurality of output laser beams and to make said plurality of output laser beams impinge on the sheet of material.

EX11. The apparatus according to EX10, wherein said plurality of output laser beams are arranged according to a 1-dimensional beam array or a 2-dimensional beam matrix of output laser beams.

EX12. The apparatus according to claim EX11, wherein the optical assembly comprises a multi-spot beam generator; the multi-spot beam generator being configured to divide the at least one laser beam from the laser source in the plurality of output laser beams.

EX13. The apparatus according to EX12, wherein the multi-spot beam generator is a diffractive optical element.

EX14. The apparatus according to EX12 or EX13, wherein the multi-spot beam generator is fixed or is configured to be rotated around an axis matching the laser beam coming from the laser source to rotate the plurality of output laser beams.

EX15. The apparatus according to any of EX8 to EX14, wherein the optical assembly comprises a focusing lens configured to focus the at least one laser beam on the sheet of material.

EX16. The apparatus according to claim EX15 when according to any of EX12 to EX14, wherein the focusing lens is placed between the multi-spot beam generator and the sheet of material to focus each of the plurality of output laser beams on the sheet of material.

EX17. The apparatus according to EX12 or EX16, wherein the weakening device comprises a plurality of laser sources and a plurality of multi-spot beam generators each coupled to a respective laser source to direct the plurality of output laser beams on different parts of the sheet of material.

EX18. The apparatus according to claim EX12 or EX16, wherein the optical assembly comprises a plurality of multi-spot beam generators coupled to one laser source to direct the plurality of output laser beams on different parts of the sheet of material.

EX19. The apparatus according to claim EX18, wherein the one laser source is movable to direct the laser beam towards one of multi-spot beam generators at a time.

EX20. The apparatus according to claim EX18, wherein the optical assembly further comprises at least one beam splitter and a plurality of reflecting elements to direct the laser beam towards all the multi-spot beam generators simultaneously.

EX21. The apparatus according to any of EX17 to EX20 when EX17 or EX18 are according to EX16, wherein each multi-spot beam generator is paired with a respective focusing lens.

EX22. The apparatus according to EX16, wherein the optical assembly comprises a single multi-spot beam generator extending across a width of the sheet of material and coupled to one laser source; wherein the one laser source is movable to direct the laser beam towards different portions of the single multi-spot beam generator.

EX23. The apparatus according to EX22, wherein the focusing lens extends across a width of the sheet of material and the single multi-spot beam generator is paired with said focusing lens.

EX24. The apparatus according to any of EX1 to EX23, wherein the at least one laser source is a carbon-dioxide laser or a fiber laser; optionally, a power of the laser source is between 200 W and 600 W.

EX25. The apparatus according to any of EX1 to EX24, wherein the weakening device comprises a blower and/or a suction device working on the sheet of material to remove fumes and residues generated by the laser beam.

EX26. The apparatus according to EX25, wherein the blower and/or the suction device is/are located at or downstream of the at least one laser source.

EX27. The apparatus according to any of EX1 to EX26, wherein the storage of the sheet of material is a reel holder and the sheet of material is coiled on said reel holder.

EX28. The apparatus according to any of EX1 to EX26, wherein the storage of the sheet of material is a bale.

EX29. The apparatus according to any of EX1 to EX28, wherein the folding and wrapping device comprises a funnel-shaped device and a feeder of the wrapper.

EX30. A method for manufacturing rod-shaped elements for aerosol-generating articles, comprising:
- conveying a sheet of material along a conveying path and in a conveying direction parallel to a longitudinal direction of said sheet of material;
- weakening the sheet of material while conveyed along the conveying path;
- gathering the sheet of material in a rod-shaped configuration and wrapping the sheet of material in the rod-shaped configuration in a wrapper to form a continuous rod while conveyed along the conveying path;
- cutting the continuous rod in a plurality of rod-shaped elements;
wherein weakening the sheet of material comprises: directing at least one laser beam on the sheet of material to create weakened lines by removing material from the sheet of material.

EX31. The method according to EX30, comprising: directing the at least one laser beam on one side or on both sides of the sheet of material such to make the weakened lines (grooves) on said one side or both sides.

EX32. The method according to EX30 or EX31, comprising: keeping the at least one laser beam stationary while the sheet of material moves in the conveying direction or moving the at least one laser beam transversely to the conveying direction.

EX33. The method according to any of EX30 to EX32, comprising: controlling the at least one laser beam such that the weakened lines have a final depth less than a thickness of the sheet of material (to create grooves or dots not passing through the sheet of material) or equal to the thickness of the sheet of material (to create slits or perforations passing through the sheet of material).

EX34. The method according to EX33, wherein a ratio of the final depth of the grooves to the thickness of the sheet of material is between 0.2 and 0.8, optionally between 0.4 and 0.6, optionally of 0.5.

EX35. The method according to any of EX30 to EX34, comprising: engraving progressively the weakened lines through laser beams following one after the other.

EX36. The method according to EX35, wherein the laser beams following one after the other are between two and six in number.

EX37. The method according to EX35 or EX36, wherein the laser beams following one after the other are controlled to each engrave a respective depth; each respective depth being between 1/6 and 1/2 of a final depth of the weakened lines.

EX38. The method according to any of EX30 to EX37, further comprising: focusing the at least one laser beam on the sheet of material.

EX39. The method according to any of EX30 to EX38, wherein an amount of material removed by making the weakened lines through the at least one laser beam is between 5% and 15% of the sheet of material, optionally between 7% and 13%, optionally 10%.

EX40. The method according to any of EX30 to EX39, wherein directing at least one laser beam comprises: dividing the at least one laser beam in a plurality of output laser beams and making said plurality of output laser beams impinge on the sheet of material.

EX41. The method according to EX40, wherein said plurality of output laser beams are arranged according to a 1-dimensional beam array or a 2-dimensional beam matrix of laser beams.

EX42. The method according to EX40 or EX41 when EX40 is according to EX38, wherein the at least one laser beam is focused after dividing in the plurality of output laser beams.

EX43. The method according to EX41 or according to EX42 when according to EX41, wherein the 1-dimensional beam array spans across a width of the sheet of material; optionally the 1-dimensional array comprises P dots; wherein optionally the P dots are between 2 and 6.

EX44. The method according to EX41, wherein the output laser beams of the 2-dimensional beam matrix are arranged in M rows and N columns, wherein the M rows span across a width of the sheet of material and the N columns span along the longitudinal direction of said sheet of material; wherein optionally the M rows are between 2 and 6; wherein optionally the N columns are between 2 and 6.

EX45. The method according to EX44 when EX40 is according to EX35, EX36 or EX37, wherein the laser beams following one after the other are the output laser beams of each of the N columns.

EX46. The method according to any of EX30 to EX45, wherein directing the at least one laser beam on the sheet of material comprises: directing a first laser beam or a first plurality of laser beams on one side of the sheet of material, turning upside down the sheet of material and switching sides of the sheet of material, directing a second laser beam or a second plurality of laser beams on an opposite side of the sheet of material.

EX47. The method according to any of EX30 to EX46, comprising: supporting one side of the sheet of material on a flat surface or on a guiding roller while an opposite side of the sheet of material receives the at least one laser beam.

EX48. The method according to any of EX30 to EX47, comprising: keeping the sheet of material flat at least where it receives the at least one laser beam.

EX49. The method according to any of EX30 to EX48, comprising: moving the sheet of material along the conveying direction with a conveying speed between 200 m/min and 500 m/min while receiving the at least one laser beam.

EX50. The method according to any of EX30 to EX49 carried out through the apparatus of any of EX1 to EX29.

EX51. The apparatus according to any of EX1 to EX29 configured to carry out the method of any of EX30 to EX49.

EX52. A sheet of material for manufacturing rod-shaped elements for aerosol-generating articles, said sheet of material being weakened using the apparatus of any of EX1 to EX29 or through the method of any of EX30 to EX49.

EX53. The sheet of material according to EX52, having weakened lines (grooves) on one side or on both sides.

EX54. The sheet of material according to EX53, wherein the weakened lines one side are offset with respect to the weakened lines on the opposite side.

EX55. The sheet of material according to any of EX52 to EX54, wherein the weakened lines are continuous or interrupted or dotted or dashed.

EX56. The sheet of material according to any of EX52 to EX54, wherein the weakened lines are straight or wavy.

EX57. The sheet of material according to any of EX52 to EX56, wherein said sheet of material is an aerosol-generating substrate, optionally a reconstituted tobacco sheet.

EX58. The sheet of material according to any of EX52 to EX56, wherein said sheet of material is made of polymeric material, such as polylactic acid, or cellulose or acetate tow or cotton.

EX59. A rod-shaped element for aerosol-generating articles made using the apparatus of any of EX1 to EX29 or through the method of any of EX30 to EX49 and comprising a sheet of material according to any of EX52 to EX58, wherein said rod-shaped element is an aerosol-generating plug or an auxiliary plug, optionally used as filter or element for cooling down the aerosol.

EX60. An aerosol-generating article comprising at least one rod shaped element according to EX59.

Examples will now be further described with reference to the figures in which:
Figure 1 shows a schematic side view of an apparatus for manufacturing rod-shaped elements for aerosol-generating articles;
Figure 2 shows a top view of the apparatus of Figure 1;
Figures 3A and 3B show a longitudinal section and a cross section of a rod shaped element manufactured through the apparatus of Figures 1 and 2;
Figure 4 shows an exploded view of an aerosol-generating article comprising the rod shaped element of Figures 3A and 3B;
Figure 5 is a 3D view of a part of the weakening device of the apparatus of Figures 1 and 2;
Figure 6 is another 3D view of the part of Figure 5 according to a variant embodiment;
Figure 7 is a front view of the weakening device of Figures 1 and 2;
Figure 8 is a front view of a different embodiment of the weakening device of Figures 1 and 2;
Figure 9 shows a different embodiment of the weakening device of Figures 7 and 8;
Figure 10 shows a different embodiment of the weakening device of Figures 7 and 8;
Figure 11 shows a portion of a different embodiment of the apparatus of Figures 1 and 2;
Figure 12 shows the portion of Figure 11 according to another embodiment of the apparatus of Figures 1 and 2;
Figure 13A is a cross section of a portion of a sheet of material processed in the apparatus of Figures 1 and 2;
Figure 13B shows the cross section of Figure 13A in a folding step;
Figure 14 is a cross section of a portion of a sheet of material processed in the apparatus of Figures 11 or 12.

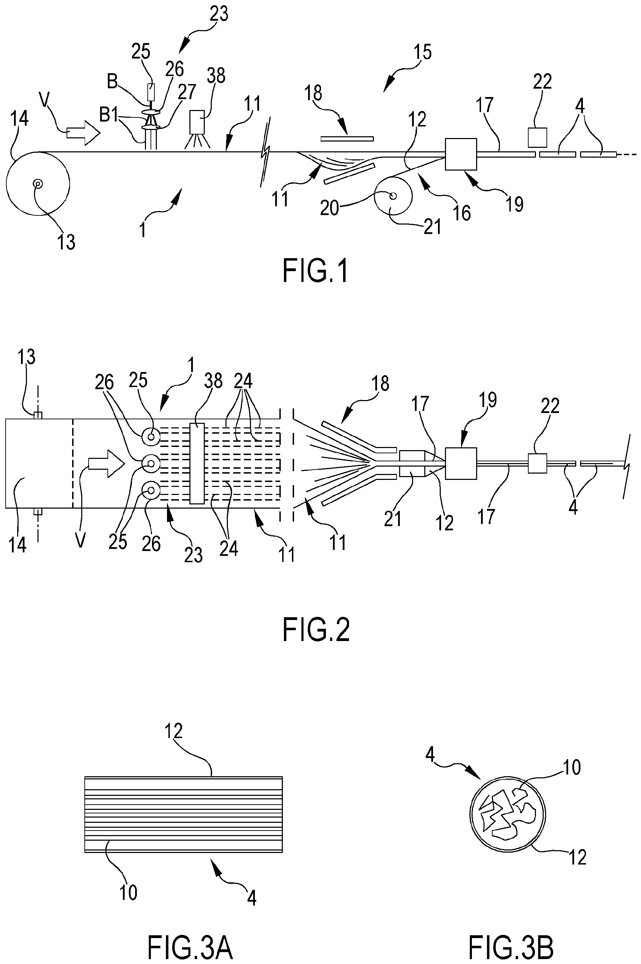

The apparatus 1 shown in Figures 1 and 2 is configured for manufacturing rod-shaped elements for aerosol-generating articles 2 and may be part of a plant for manufacturing aerosol-generating articles 2. The apparatus 1 shown in Figures 1 and 2 is configured to carry out a method for manufacturing rod-shaped elements for aerosol-generating articles as will become clear from the following disclosure.

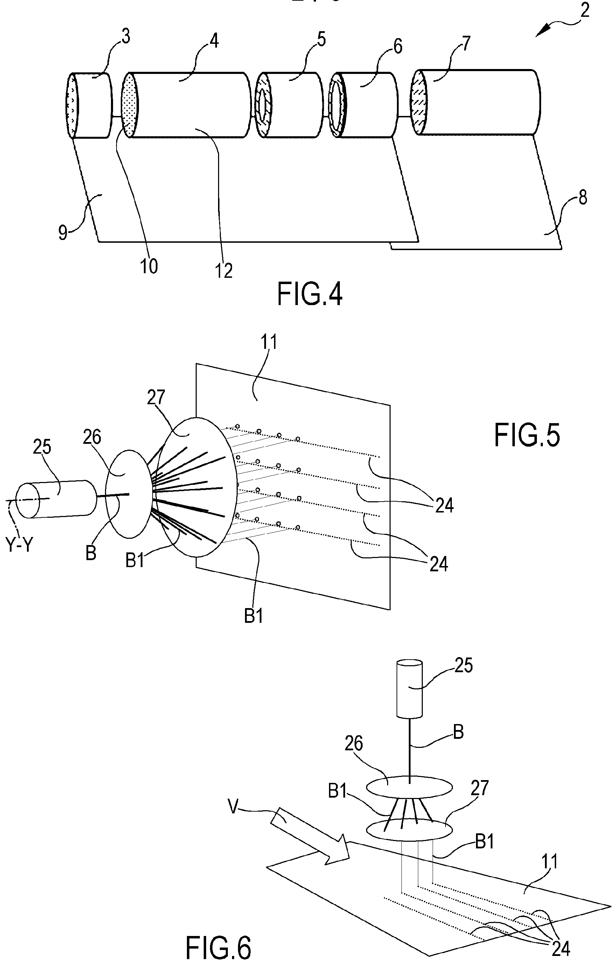

One example embodiment of aerosol-generating article 2 is depicted in the exploded view of Figure 4 and comprises (from left to right in Figure 4): a front plug 3 (solid plug), an aerosol-generating plug 4, a tubular plug 5 (hollow plug, for instance of cellulose acetate), a fine tubular plug 6 (similar to the tubular plug 5 but with a thinner wall) and a filter plug 7 (mouthpiece filter usually made of tow). Each plug has a wrapping of its own (not detailed Figure 4) helping to contain properly their content. A tipping paper 8 connects the filter plug 7 to the rest of the plugs, and the front plug 3, aerosol-generating plug 4, tubular plug 5 and fine tubular plug 6 are wrapped together into a wrapping paper 9. The tubular plug 5 and fine tubular plug 6 are auxiliary plugs configured to cool down the aerosol formed by heating the aerosol-generating plug 4.

The aerosol-generating plug 4 comprises an aerosol-generating substrate 10 made of a sheet of material 11 gathered in a continuous rod shape and wrapped in a wrapper 12. The material of the aerosol-generating substrate 11 may comprise reconstituted tobacco or tobacco-free herbaceous or plant-based material or a biodegradable fiber-based material. The filter plug 7 may be made of another sheet of material of polylactic acid or cellulose or acetate tow or cotton gathered in a continuous rod shape.

The rod-shaped elements made by the apparatus 1 shown in Figures 1 and 2 may be the aerosol-generating plugs 4 or the filter plugs 7.

The apparatus 1 comprises a reel holder 13 and the sheet of material 11 is coiled in a bobbin 14 on said reel holder 13. In other embodiments, not shown in the Figures, a storage of the sheet of material is a bale, for instance a bale of tow. An extraction device is configured to uncoil the sheet of material 11 from the bobbin 14 and to guide the sheet of material 11 along a conveying path and in a conveying direction "F" parallel to a longitudinal direction of said sheet of material 11. For instance, the extraction device, not shown in Figures 1 and 2, comprises a plurality of rollers, at least some of them being motorized.

Downstream of the reel holder 13, with respect to the conveying direction "F", the apparatus 1 comprises a folding and wrapping device 15 which is configured to move the sheet of material 11 from a flat configuration (upstream of the folding and wrapping device 15) to a gathered rod-shaped configuration, to wrap the sheet of material 11 in the rod-shaped configuration in the wrapper 12 and forming a continuous rod 17 (downstream of the folding and wrapping device 15).

The folding and wrapping device 15 comprises a funnel-shaped device 18 followed by a guide 19 cooperating with a feeder 16 of the wrapper 12. The guide, not shown in Figures, may be known per se and may comprise a U-shaped channel with additional folding elements configured to close the wrapper 12 around the gathered sheet of material 11. The feeder 16 of the wrapper 12 is represented as an auxiliary reel holder 20 on which the wrapper 12 is wound in an auxiliary bobbin 21.

A cutting device 22, for instance a rotating blade, is placed downstream of the folding and wrapping device 15 and is configured for cutting the continuous rod 17 in a plurality of rod-shaped elements 4.

The apparatus 1 further comprises a weakening device 23 placed along the conveying path downstream of the bobbin 14 and upstream of the folding and wrapping device 15. The weakening device 23 is configured for weakening the sheet of material 11 before the folding and gathering, by generating weakened lines 24 (grooves not passing through the sheet of material 11 or slits passing through the sheet of material 11) in the sheet of material 11.

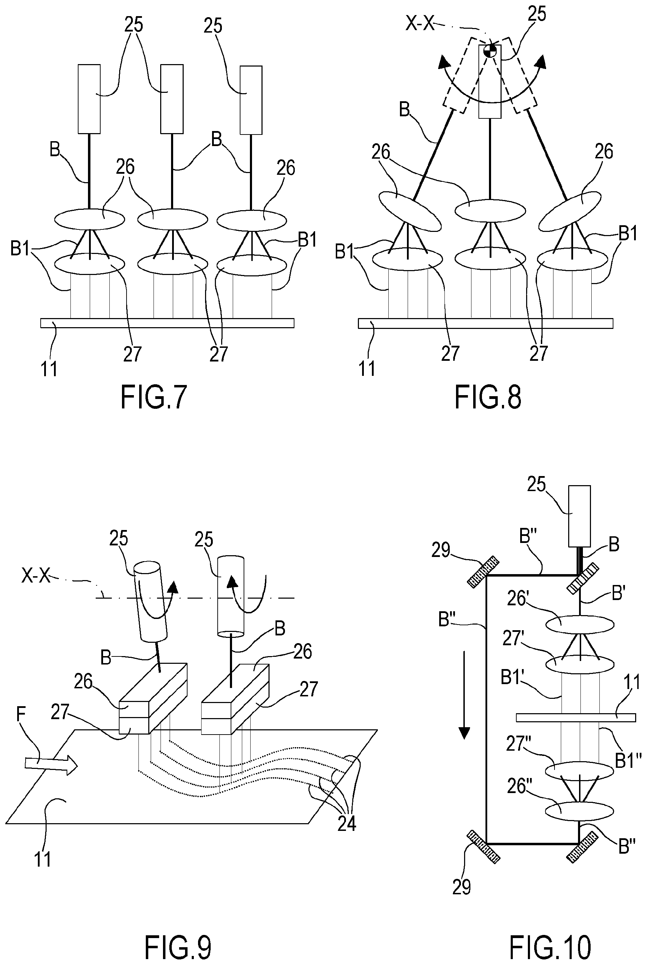

The weakening device 23 shown in Figures 1 and 2 comprises three laser sources 25 each coupled to a respective optical assembly. The laser sources 25 may be carbon-dioxide lasers (wavelength between 9 µm and 11 µm) or a fiber lasers (wavelength between 0.8 µm and 2.3 µm). Figure 7 shows the three laser sources 25 with the respective optical assembly are placed side by side across a width of the sheet of material 11. Figures 5 and 6 show one of the laser sources 25 with the respective optical assembly.

The optical assembly is configured to intercept the at least one laser beam B and to direct and target the at least one laser beam on the sheet of material 11. The optical assembly comprises a multi-spot beam generator 26 and a focusing lens 27.

The multi-spot beam generator 26 is a diffractive optical element located in front of the laser source 25 such that a laser beam B emitted by the laser source 25 hits and crosses the multi-spot beam generator 26 and is divided in a plurality of output laser beams B1.

The multi-spot beam generator 26 divides a high power laser beam B in the plurality of low power output laser beams B1.

The focusing lens 27 is placed between the laser source 25 and the sheet of material 11. According to figures 1 and 2, the focusing lens 27 faces an upper side of the sheet of material 11. The plurality of output laser beams B1 are focused on the upper side of the sheet of material 11 through the focusing lens 27.

In the example of Figure 5, the plurality of output laser beams B1 are arranged according to a 2-dimensional beam matrix having M rows and N columns. The M rows span across a width of the sheet of material and the N columns spans along the longitudinal direction of said sheet of material. The example shown in Figure 5 comprises four rows and four columns (M=4, N=4). In the example of Figure 5, the three laser source 25 with the respective optical assembly generates a 2-dimensional beam matrix having three rows and three columns (M=3, N=3). Therefore, the overall 2-dimensional beam matrix generated by the three laser sources 25 has three rows and nine columns.

Figure 6 shows an embodiment of the laser source 25 coupled to a respective optical assembly in which the multi-spot beam generator 26 is configured to generate a 1-dimensional array of laser beams B1 instead of the 2-dimensional beam matrix.

The laser sources 25 and the optical assemblies of Figures 1, 2, 5, 6 and 7 are stationary while the sheet of material 11 moves along the conveying direction "F". Thus, when activated, the output laser beams B1 engrave straight and parallel weakened lines 24 defined by grooves in the upper side of the sheet of material 11 by vaporizing part of said material.

The output laser beams B1 of each column of the 2-dimensional beam matrix of Figure 5 follow one after the other along a line parallel to the conveying direction "F". The laser sources 25 are controlled such that the groove 24 is engraved progressively by the four output laser beams B1 of each column of Figure 5, by sweeping the sheet of material 11 one after the other.

The grooves 24 have a final depth D less than a thickness t of the sheet of material 11. A ratio of the final depth D of the grooves to the thickness t of the sheet of material 11 may be between 0.2 and 0.8, optionally between 0.4 and 0.6, optionally of 0.5. For instance, the sheet of material 11 has a thickness t of 200 µm and a final depth D of the grooves to be generated is 100 µm. The three output laser beams B1 of each column of Figures 1, 2 and 7 are controlled to engrave each a partial depth of about 33 µm. The four output laser beams B1 of each column of Figure 5 are controlled to engrave each a partial depth of 25 µm, as shown in the following Table 1. The output laser beams B1 following one after the other are controlled to each engrave a respective depth between 1/6 and 1/2 of the final depth D of the grooves 24.

**Table 1**

| Laser beams B1 in one column | Incremental depth of the groove |
|---|---|
| 1 | 25 µm |
| 2 | 50 µm |
| 3 | 75 µm |
| 4 | 100 µm |

Figure 8 shows an embodiment comprising one single laser source 25 working together with three optical assemblies, each comprising one multi-spot beam generator 26 and one focusing lens 27. The three optical assemblies are stationary and the one single laser source 25 is configured to swing about a swinging axis "X-X" to direct the laser beam B towards one of multi-spot beam generators 26 at a time. The swinging axis "X-X" is parallel to the conveying direction "F". An actuator or motor, not shown, is configured to move the one single laser source 25 about the swinging axis "X-X". The laser beam B is therefore moved transversely to the conveying direction "F".

Figure 9 shows another embodiment comprising a couple of single laser sources 25 each working together with a respective optical assembly comprising a single multi-spot beam generator 26 and a single focusing lens 27, represented schematically as a parallelepiped in Figure 9, extending across a width of the sheet of material 11. The laser sources 25 are configured to swing about the swinging axis "X-X" to direct the laser beam B towards different portions of the single multi-spot beam generator. The relative motion of the sheet of material 11, moving along the conveying direction "F", and of the output laser beams B1 generates wavy weakened lines 24, i.e. a pattern in which not parallel to the conveying direction "F".

In a variant of the embodiment of Figure 5, the multi-spot beam generator 26 and the focusing lens 27 may be rotated about an axis "Y-Y" matching the laser beam B coming from the laser source 25 in order to rotate the plurality of output laser beams B1 while the sheet of material moves along the conveying direction "F".

Figure 10 shows another embodiment comprising a single laser source 25, wherein the optical assembly is configured to direct the plurality of output laser beams B1', B1" on both sides of the sheet of material 11 so to create grooves 24 on both sides. The laser source 25 is located above the sheet of material 11 and points towards the sheet of material 11. The optical assembly comprises a first multi-spot beam generator 26' and a first focusing lens 27' located in front of the laser source 25 and between said laser source 25 and the upper side of the sheet of material 11. The optical assembly comprises a second multi-spot beam generator 26" and a second focusing lens 27" placed in front of a lower side of the sheet of material 11. The optical assembly further comprises a beam splitter 28 configured to split the laser beam B in a transmitted laser beam B' and in a reflected laser beam B". The transmitted laser beam B' reaches the first multi-spot beam generator 26' and the first focusing lens 27' and is divided in a first plurality of output laser beams B1' focused on the upper side. The reflected laser beam B" is further reflected by three reflecting elements 29 arranged to direct said reflected laser beam B" towards the second multi-spot beam generator 26" and is divided in a second plurality of output laser beams B1" focused on the lower side of the sheet of material 11 by the second focusing lens 27".

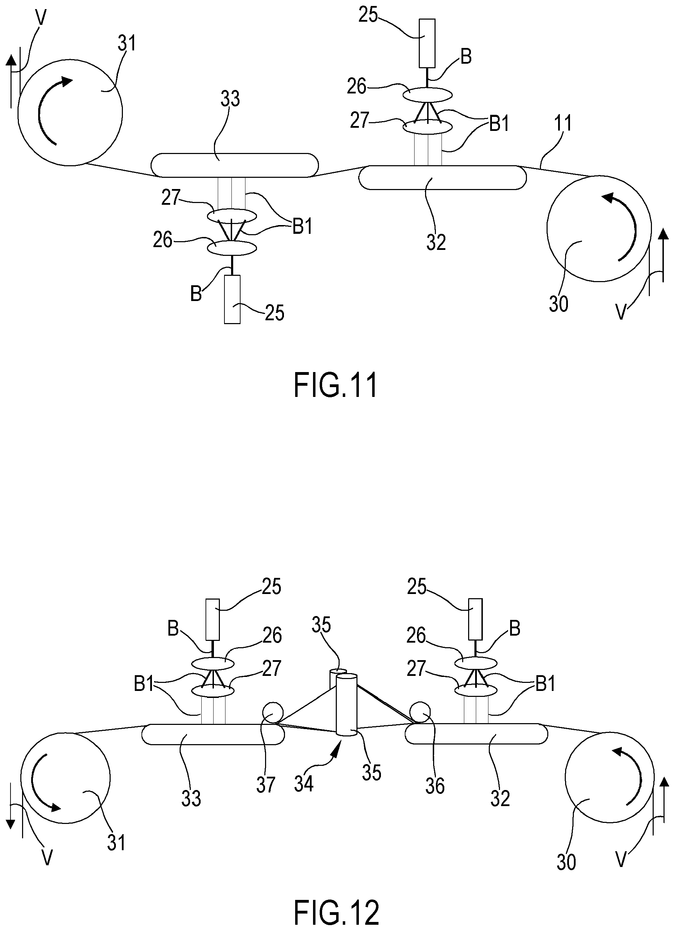

Figure 11 shows a portion of the apparatus 1 according to a different embodiment configured to generate the grooves 24 on both sides of the sheet of material 11. The illustrated portion is positioned between the bobbin 14 and the funnel-shaped device 18. Said portion comprises a first pulley 30 and a second pulley 31 for guiding and dragging the sheet of material 11 along the conveying direction "F". A first support element 32 and a second support element 33 are arranged one after the other between the first pulley 30 and the second pulley 31 and along the conveying direction "F". A lower side of the sheet of material 11 slides in contact with an upper flat surface of the first support element 32. An upper side of the sheet of material 11 slides in contact with a lower flat surface of the second support element 33. The first support element 32 and the second support element 33, for instance shaped like boards, keep sheet of material 11 flat where it receives the output laser beams B1. For instance the flat surface has a honeycomb or lattice-like structure and is made of a low friction material, such as stainless steel with surface treatments that provide low treatments (ex. DLC).

A row of laser sources 25 with respective optical assemblies, like the row in Figures 1 and 2, is placed above the first support element 32 such that the output laser beams B1 hit the upper side of the sheet of material 11. Another row of laser sources 25 with a respective optical assemblies is placed below the second support element 33 such that the output laser beams B1 hit the lower side of the sheet of material 11.

Figure 12 shows a variant embodiment of the portion of Figure 11 which is configured to generate the grooves 24 on both sides of the sheet of material 11. This variant embodiment comprises the first pulley 30, the second pulley 31, the first support element 32 and the second support element 33 as in Figure 11. Differently from Figure 11, the sheet of material 11 slides in contact with the upper flat surface of the second support element 33. Differently from Figure 11, a row of laser sources 25 with respective optical assemblies is placed above the second support element 33.

In addition, a turning device 34 is located between the rows of laser sources 25 and between the first support element 32 and the second support element 33 along the conveying path. The turning device 34 is configured to turn upside down the sheet of material 11 and to switch the sides of the sheet of material 11. In the example embodiment of Figure 12, the turning device 34 comprises a couple of rollers 35 facing each other and having parallel rotation axes. Peripheral surfaces of the couple of rollers 35 are close to each other and delimit a passage slit for the sheet of material 11. The rotation axes of the rollers 35 and the passage slit are vertical while the flat surfaces of the first and second support elements 32, 33 lie in a horizontal plane.

A first auxiliary roller 36 faces the upper flat surface of the first support element 32 and a second auxiliary roller 37 faces the upper flat surface of the second support element 33. The sheet of material 11 slides on the upper flat surface of the first support element 32 while receiving the output laser beams B1 from the respective row of laser sources 25. Then the sheet of material 11 moves between the first auxiliary roller 36 and the first support element 32, goes through the vertical slit and between the second auxiliary roller 37 and the second support element 33 and then slides on the upper flat surface of the second support element 32 while receiving the output laser beams B1 from the respective row of laser sources 25.

While moving from between the first auxiliary roller 36 and the first support element 32, through the vertical slit and between the second auxiliary roller 37 and the second support element 33, the sheet of material 11 is twisted by 180° so as to reverse the sides. Therefore, the output laser beams B1 above the first support element 32 makes grooves 24 on one side of the sheet of material 11 and the output laser beams B1 above the second support element 33 makes grooves 24 on the other side of the sheet of material 11.

In other embodiments, not shown, the sheet of material is supported by guide roller instead of the support element or elements with flat surface.

A blower 38 and/or a suction device, depicted in Figures 1 and 2, is/are located at or downstream of the rows of laser sources 25 on the second support element 33 to remove fumes and/or residues generated by the material vaporized by the output laser beams B1. A blower 38 and/or a suction device may also be placed at or downstream of the rows of laser sources 25 on the first support element 33.

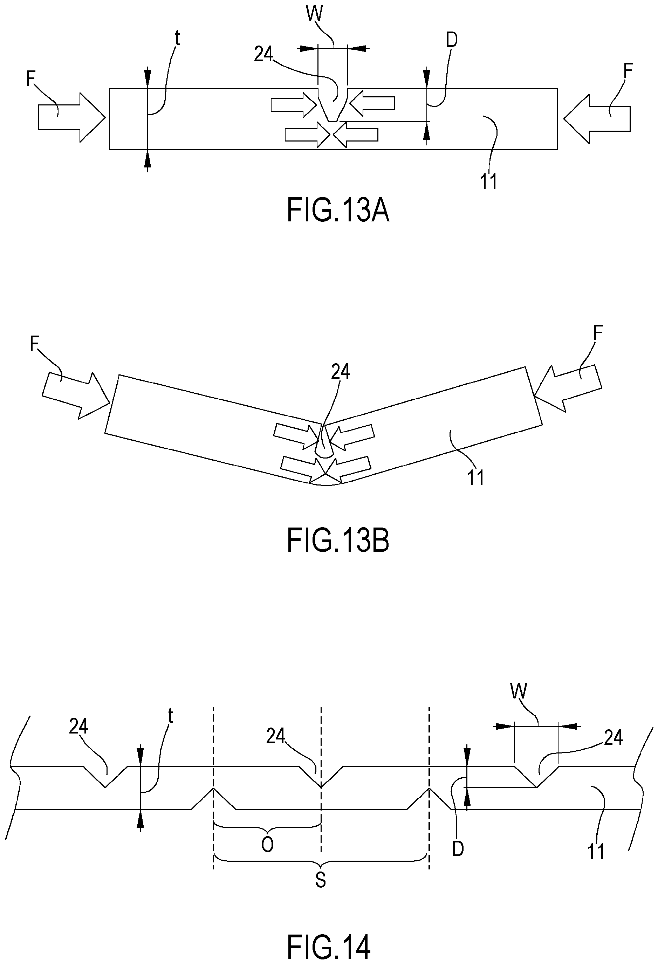

Figures 13A and 13B show a cross section of a portion of the sheet of material 11 weakened through the apparatus 1 above discussed. The sheet of material of figure 11 has the grooves 24 on one side. The groove 24 has a width W (maximum width at the surface) and a final depth D that is little more than half the thickness t of the sheet of material 11. Figure 13B shows that, when forces F are exerted on the sheet of material 11 by moving the sheet of material 11 through the funnel-shaped device 18, the empty space generated by the groove 24 has no resistance to compression and thus the groove 24 behaves like a fold line.

Figure 14 shows a cross section of a portion of the sheet of material 11 having a thickness t and being provided with grooves 24 in the upper side and in the lower side. The grooves 24 in the upper side have a width W, a final depth D and are spaced one from the other of a distance S. The grooves 24 in the lower side have the same width W, the same final depth D and are spaced one from the other of the same distance S. The grooves 24 in the lower side are offset with respect to the grooves 24 in the upper side by an offset O.

The following Table 2 discloses possible sizes of the sheet of material 11 and of the grooves 24 of Figure 14. A conveying speed of the sheet of material 11 along the conveying direction is for instance 500 m/min and a laser power range between 200 W and 600 W.

**Table 2**

| | |
|---|---|
| Width of the sheet of material | 12.5 cm |
| t | 200 µm |
| D | 100 µm |
| W | 200 µm |
| S | 1000 µm |
| O | 500 µm |
| Number of grooves per side | 123 - 125 |
| Removed material by laser | 10% |

In some embodiments, the laser sources 25 work intermittently to generate interrupted or dotted or dashed weakened lines 24 (grooves or slits), as represented in Figure 2. In some other embodiments, the laser sources 25 work continuously to generate continuous weakened lines 24 (grooves or slits), as represented in Figures 5, 6 and 9.

## Claims

1. Apparatus for manufacturing rod-shaped elements for aerosol-generating articles, comprising:
an extraction device configured to extract a sheet of material from a storage of the sheet of material and to guide the sheet of material along a conveying path and in a conveying direction parallel to a longitudinal direction of said sheet of material;
a weakening device placed along the conveying path and downstream of the extraction device, the weakening device being configured for weakening the sheet of material;
a folding and wrapping device placed downstream of the weakening device and configured for gathering the sheet of material in a rod-shaped configuration and to wrap the sheet of material in the rod-shaped configuration in a wrapper and forming a continuous rod;
a cutting device placed downstream of the folding and wrapping device and configured for cutting the continuous rod in a plurality of rod-shaped elements;
wherein the weakening device comprises at least one laser source configured for creating weakened lines by removing material from the sheet of material through a laser beam emitted by the laser source.

2. The apparatus according to claim 1, wherein the at least one laser source is arranged to direct the laser beam on one side or on both sides of the sheet of material.

3. The apparatus according to claim 1 or 2, wherein the at least one laser source is stationary while the sheet of material moves in the conveying direction or wherein the at least one laser source is movable transversely to said conveying direction.

4. The apparatus according to any of claims 1 to 3, wherein the at least one laser source is configured to generate at least two laser beams aligned along a line parallel to the conveying direction to engrave progressively the sheet of material by the at least two laser beams sweeping the sheet of material one after the other.

5. The apparatus according to any of claims 1 to 4, comprising a turning device located between successive laser sources along the conveying path, the turning device being configured to turn upside down the sheet of material and to switch sides of the sheet of material.

6. The apparatus according to any of claims 1 to 5, further comprising a support element having a flat surface located along the conveying path, the flat surface lying against one side of the sheet of material while an opposite side of the sheet of material receives the laser beam emitted by the laser source.

7. The apparatus according to any of claims 1 to 6, wherein the weakening device comprises an optical assembly configured to intercept the at least one laser beam and to direct and target the at least one laser beam on the sheet of material; the optical assembly being configured to generate a plurality of output laser beams, optionally arranged according to a 1-dimensional beam array or a 2-dimensional beam matrix of output laser beams, and to make said plurality of output laser beams impinge on the sheet of material.

8. The apparatus according to claim 7, wherein the optical assembly comprises a multi-spot beam generator; the multi-spot beam generator being configured to divide the at least one laser beam from the laser source in the plurality of output laser beams.

9. A method for manufacturing rod-shaped elements for aerosol-generating articles, comprising:
- conveying a sheet of material along a conveying path and in a conveying direction parallel to a longitudinal direction of said sheet of material;
- weakening the sheet of material while conveyed along the conveying path;
- gathering the sheet of material in a rod-shaped configuration and wrapping the sheet of material in the rod-shaped configuration in a wrapper to form a continuous rod while conveyed along the conveying path;
- cutting the continuous rod in a plurality of rod-shaped elements;
wherein weakening the sheet of material comprises: directing at least one laser beam on the sheet of material to create weakened lines by removing material from the sheet of material.

10. The method according to claim 9, comprising: controlling the at least one laser beam such that the weakened lines have a final depth less than a thickness of the sheet of material or equal to said thickness of the sheet of material.

11. The method according to claim 10, wherein a ratio of the final depth of the weakened lines to the thickness of the sheet of material is between 0.2 and 0.8, optionally between 0.4 and 0.6, optionally of 0.5.

12. The method according to any of claims 9 to 11, comprising: engraving progressively the weakened lines through laser beams following one after the other; wherein the laser beams following one after the other are controlled to each engrave a respective depth; each respective depth being between 1/6 and 1/2 of the final depth of the weakened lines.

13. The method according to any of claims 9 to 12, wherein an amount of material removed by making the weakened lines through the at least one laser beam is between 1% and 15% of the sheet of material, optionally between 7% and 13%, optionally 10%.

14. The method according to any of claims 9 to 13, comprising: keeping the sheet of material flat at least where it receives the at least one laser beam.

15. The method according to any of claims 9 to 14, wherein weakened lines may be continuous or interrupted or dotted or dashed.
